# EUROPEAN PATENT APPLICATION

(11) **EP 3 950 915 A1**
(43) Date of publication of application: **09.02.2022**
(21) Application number: 21188604.9
(22) Date of filing: 29.07.2021
(51) Int. Cl.: C12H 1/04, A23L 2/72, A23L 2/78, B65D 39/00

(54) **A BEVERAGE FILTRATION DEVICE**

(30) Priority: 06.08.2020 US 202063061954 P
(71) Applicant: Purewine Inc., Grapevine TX 76051 (US)
(72) Inventor: MEADOWS, David L., Colleyville, 76034 (US); MEADOWS, Derek, Colleyville, 76034 (US)
(74) Representative: Swindell & Pearson Limited

(57) **Abstract**

Beverage filtration device including a lid body having an internal housing configured to hold an ion exchange resin-filed cartridge therein having a connection end and a top end having an opening therein, and, stem body having a cap region, collar, beverage conduit and stem air tube. The cap region couples to the connection end of the lid body to form a liquid-tight seal there-between. A collar wall first portion fits inside a beverage mouth container and a second portion located outside of the mouth. The beverage conduit spans the collar, a first conduit opening open to the coupling between the cap region the connection end and a second conduit open to a container interior. The stem body air tube extends through the collar, a proximal opening of the stem body air tube opens to an air vent hole located in the second portion of the collar wall, and, a distal opening of the stem body air tube opens to the container interior.

## Description

### TECHNICAL FIELD

This application is directed, in general, to the treatment of beverages, more specifically, to a filtration device to treat alcoholic beverages to remove noxious elements in the beverage

### BACKGROUND

Large segments of the population, consuming alcoholic beverages can experience negative symptoms (e.g., headaches, congestion and flushing) associated with the presence of certain noxious elements in the beverage, such as preservatives, biogenic amines and oxidized components. What is needed in the art is a simplified consumer-friendly treatment of beverages to remove such elements from alcoholic beverages sold in commercially available containers.

### SUMMARY

A beverage filtration device including a lid body and a stem body. The lid body has an internal housing configured to hold an ion exchange resin-filed cartridge therein, the lid body having a connection end and a top end having an opening therein. The stem body includes a cap region, collar, beverage conduit and stem air tube. The cap region is configured to couple to the connection end of the lid body to form a liquid-tight seal coupling there-between. A first portion of a wall of the collar is sized to fit inside a mouth of a beverage container and a second portion of the wall is sized to be located outside of the mouth. The beverage conduit spans the collar, where a first opening of the conduit opens to the coupling between the cap region and the connection end and a second opening of the conduit opens to an interior of the beverage container. The stem body air tube extends through the collar, where a proximal opening of the stem body air tube opens to an air vent hole located in the second portion of the wall of the collar, and, a distal opening of the stem body air tube opens to the interior of the beverage container.

The coupling between the cap region of the stem body and the connection end of the lid body may form a reservoir there-between. The cap region of the stem body may have a concave cupped shape interior surface defining a portion of the reservoir.

The cap region of the stem body may be rotationally adjustable relative to the connection end of the lid body such that an orientation of the lid opening of the lid body relative to an air vent opening of the stem body is adjustable.

The stem body and the lid body may each have alignment tabs. When the tabs are aligned with each other, an orientation of the lid opening of the lid body relative to an air vent opening may have an orientation angle of about 180 degrees.

The device may further include an air tube extender configured to be detachably connectable to the stem body air tube. For a container having a length of 1.0 arbitrary length unit, a portion of the stem body inside the container may have a length in a range from about 0.2 to 0.6 arbitrary length units and the air tube extender may have a length in a range from about 0.7 to 0.3 arbitrary length units, respectively. The second opening of the air tube may be more distal from the lid body than the second opening of the beverage conduit.

The device may further include a stopper module configured to attach around the outer wall of the collar, the stopper module configured to form a liquid seal between the mouth and the collar when the stem body is inserted into the mouth. The stopper module may have a smaller outer diameter at the lower end of the stopper module and larger outer diameter at the upper end of the stopper module. The stopper module may include one or more ribs encircling the stopper module.

The connection end of the lid body may include an interior ridge section. The cap region may include a rim insertable into the ridge section to abut against an interior lip of the ridge section to thereby form the coupling between the cap region and the connection end. The coupling between the interior ridge section and an insertion zone of the rim may include an ultrasonic weld, a heat weld, a silicone or epoxy adhesive, a compression snap fit, a gasket o-ring seal, a threaded connection or combination thereof.

The connection end of the lid body may include an interior ridge section that forms a liquid-tight seal with the cartridge such that the beverage does not bypass the cartridge when being poured out of the device.

The opening in the top end of the lid body may be elliptically shaped with a major axis of the ellipse being parallel to a direction that the beverage is poured out of through the device. The opening in the top end of the lid body may include a lip located on a portion of an outer perimeter of the top end. The lip may overlay about 1 to 20 percent of the total length of the top end perimeter.

For a 1.0 volume unit of beverage stored in the beverage container, a volume of an ion exchange resin material in the filter cartridge may be in a range from 0.02 to 0.07 volume units.

The filter cartridge may include a barrel wall and flanges coupling a filter fabric to ends of the filter cartridge to contain an ion exchange resin material therein. A mesh size of the filter fabric may be in a range from about 5 microns to 100 microns.

The cap region of the stem body and the connection end of the lid body may be adjustable relative to each other such that the lid body and the stem body are reversibly coupled. The ion exchange resin-filed cartridge may be removeable from the internal housing when the lid body and the stem body are uncoupled by disconnecting the interior ridge section of the connection end and an insertion zone of the rim from each other. The threaded connection may include: the interior ridge section of the connection end of the lid body having one or more raised alignment tabs or clamping hooks, and the insertion zone of the stem body having one or more slots, each of the raised alignment tabs or clamping hooks insertable into one of the slots such that when the connection end and the insertion zone are rotated relative to each other, the liquid-tight seal coupling is formed.

When the connection end and the insertion zone are rotated relative to each other with the raised alignment tabs or clamping hooks each inserted into one of the slots, the rotation may adjust the lid opening of the lid body relative to an air vent opening to have an orientation angle of about 180 degrees.

The lid body may further include a pouring spout body coupled to and encompassing an outer perimeter of the top end of the lid body. A spout opening of the pouring spout body may be located on the side of the outer perimeter that is proximate to the opening in the top end.

Another beverage filtration device embodiment includes a lid body, the lid body including: a connection end, a top end having an opening therein, and a pouring spout body encompassing the opening. The device also includes a stem body, the stem body including: an internal housing configured to hold an ion exchange resin-filed cartridge therein, a cap region, collar, a beverage conduit, and a stem body air tube. The cap region is configured to couple to the connection end of the lid body to thereby form a first liquid-tight seal coupling between the connection end of the lid body and a top end of the ion exchange resin-filed cartridge, and, form a second a liquid-tight seal coupling between a base region of the internal housing and a bottom end of the ion exchange resin-filed cartridge. A first portion of a wall of the collar is sized to fit inside a mouth of a beverage container and a second portion of the wall sized to be located outside of the mouth. The beverage conduit spans the collar. A first opening of the conduit opens to the base region of the internal housing and a second opening of the conduit opens to an interior of the beverage container. The stem body air tube extends through the collar. A proximal opening of the stem body air tube opens to an air vent hole located in the second portion of the wall of the collar, and a distal opening of the stem body air tube opens to the interior of the beverage container.

The cap region of the stem body and the connection end of the lid body may be adjustable relative to each other such that the lid body and the stem body are reversibly coupled.

The first liquid-tight seal coupling between the connection end and the cap region may include a compression snap fit, a gasket o-ring seal, a threaded connection or combination thereof to form the reversible coupling.

The threaded connection may include: a surface of the connection end facing the cap region having one or more raised alignment tabs or clamping hooks, and a rim of the cap region having one or more slots, each of the raised alignment tabs or clamping hooks insertable into one of the slots such that when the connection end and the cap region are rotated relative to each other, the first and second liquid-tight seal couplings are formed.

The opening in the top end of the lid body may be elliptically shaped with a major axis of the ellipse being parallel to a direction that the beverage is poured out of through the device. An outer perimeter of the top end of the lid body may be elliptically-shaped and the connection end of the lid body is circularly-shaped.

The device may further include an outer body secured to the stem body and holding the stem body therein.

The lid body may further include a spout gasket configured to contact the connection end of the lid body and the top end of the ion exchange resin filled cartridge when the cap region is coupled to the connection end.

The stem body may further include a stem gasket configured to contact the base region of the lid body and the bottom end of the ion exchange resin filled cartridge when the cap region is coupled to the connection end. The stem body may further include an outer body gasket configured to contact the cap region of the stem body and an outer body of the device when the cap region is coupled to the connection end.

### BRIEF DESCRIPTION

Reference is now made to the following descriptions taken in conjunction with the accompanying drawings, in which:
FIG. 1A shows a front side view of an example embodiment of the beverage filtration device;
FIG. 1B shows a left side view of the example embodiment of the beverage filtration device shown in FIG. 1A;
FIG. 2A shows a cross-sectional left side view of the example embodiment of the device shown in FIG. 1A;
FIG. 2B shows detailed cross-sectional left side view of the example embodiment of the device shown in FIG. 1A;
FIG. 3A shows a detailed front side view of a stem body of the example embodiment of the device shown in FIG. 1A with a stopper module of the stem body removed;
FIG. 3B shows a detailed left side view of the stem body of the example embodiment shown in FIG. 3A;
FIG. 3C shows a detailed cross-sectional left side view of the stem body of the example embodiment shown in FIG. 3A;
FIG. 4A shows a detailed front side view of a stopper module of stem body of the example embodiment shown in FIG. 1A;
FIG. 4B shows a detailed left side view of the stopper module of lower body of the example embodiment shown in FIG. 4A;
FIG. 5A shows a detailed front side view of a lid body of the example embodiment of the device shown in FIG. 1A;
FIG. 5B shows a detailed bottom interior view of the lid body of the example embodiment shown in FIG. 5A;
FIG. 6A shows a front side photograph of an example stem body embodiment of the beverage filtration device;
FIG. 6B shows a left side view of the example stem body shown in FIG. 6A;
FIG. 7 shows a front side photograph of an example stopper module embodiment of the beverage filtration device;
FIG. 8A shows a right side upper perspective photograph of the example stem body shown in FIG. 6A;
FIGs. 8B and 8C show a top down photographs of the stem body shown along view line B-B in FIG. 8A;
FIG. 9A shows a photography of an example air tube extender embodiment of the device;
FIG. 9B shows a detailed view of a distal end of the air tube extender shown in FIG. 9A;
FIG. 10 shows an upper perspective view of an example cartridge embodiment to be housed inside the lid body of the device;
FIG. 11A shows a front side view of a portion of another example embodiment of the beverage filtration device similar to the view shown in FIG. 1A and 5A with the lid body and the stem body of the device disconnected;
FIG. 11B shows a left side view of the example embodiment of the beverage filtration device shown in FIG. 11A with the cartridge replaced and the lid body and the stem body reconnected;
FIG. 12A shows a exploded perspective view of another the example embodiment of the beverage filtration device;
FIG. 12B shows a rear side view of the beverage filtration device analogous to the device shown in FIG. 12A along view line 12B presented in FIG. 12A;
FIG. 12C shows a cross-section view of the beverage filtration device analogous to the device shown in FIG. 12A along view line 12C-12C presented in FIG. 12A;
FIG. 13A shows a detailed perspective view of the stem body of the beverage filtration device analogous to the stem body shown in FIG. 12A but with the stopper module absent;
FIG. 13B shows a detailed perspective view of the stem body shown in FIG. 13A with the stem body inverted and rotated 180 degrees;
FIG. 13C show a top down view of the stem body located in outer body of the beverage filtration device analogous to the device shown in FIG. 12A view line 13C shown in FIG. 12A with the cartridge absent;
FIG. 13D show a bottom up view of the stem body and outer body of the device shown in FIG. 12A along view line 13D shown in FIG. 12A;
FIG. 14A shows a detailed exploded perspective view of the lid body of the beverage filtration device analogous to the lid body shown in FIG. 12A;
FIG. 14B shows a detailed exploded perspective view of the lid body shown FIG. 14A with the lid body inverted and rotated 180 degrees;
FIG. 14C shows a top down view of the lid body of the beverage filtration device analogous to the device shown in FIG. 12A along view line 14C shown in FIG. 12A
FIG. 14D shows a bottom up view of the lid body of the beverage filtration device analogous to the device shown in FIG. 12A along view line 14C shown in FIG. 12A
FIG. 15A shows a detailed perspective view of the outer body of the beverage filtration device analogous to the outer body shown in FIG. 12A; and
FIG. 15B shows a top down view of the outer body of the beverage filtration device analogous to the device shown in FIG. 15A along view line 15B presented in FIG. 15A.

### DETAILED DESCRIPTION

We have developed ion exchange resins (hereinafter "resins") to treat beverages to remove noxious elements from the beverage such as preservatives, biogenic amines and oxidized components. Non-limiting example suitable resin materials are disclosed in US patent no. 9,670,442 ("Treatment of beverages to reduce the effects of noxious constituents" to Meadows et al. "Meadows") which is incorporated by reference in its entirety herein.

The problem remains, however, of how to use these resins to rapidly and efficiently remove noxious elements from beverages held in a bottle or other commercial containers normally used to hold alcoholic beverages. Disclosed herein is a filtration device designed to remove these elements by filtering the beverage through the resin contained in the device, as the beverage is being poured out of its holding container. The filtration device includes a combination of components that work together to enable the noxious elements to be removed without spilling the beverage and without an excessively slow pouring time.

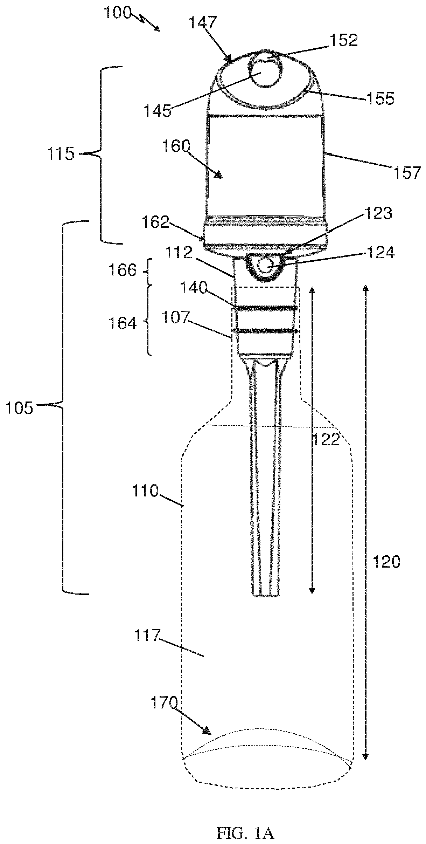

FIGs. 1A-5B illustrates various aspects of example embodiments of a beverage filtration device 100 as further explained below.

With continuing reference to FIGs. 1A-5B, throughout, embodiments of the filtration device 100 can include: a stem body 105 which is insertable into the mouth 107 of a beverage container 110 (e.g., an alcohol-containing beverage container) via a stopper module 112, a lid body 115 housing an ion exchange resin-filed cartridge 210 therein and an air tube extender 215.

The filtration device 100 is configured such that the flow of the beverage 117 through the cartridge 210 is not too fast as to limit its filtering function and not too slow as to dissuade its use in a consumer environment (e.g., at home or in a restaurant or bar). The flow of the beverage 117 allows the residence time of the beverage 117 to be sufficiently long enough (e.g., about 5 to 30 sec) to remove appropriate amounts of the undesired components (e.g., at least about 25% of preservatives, biogenic amines and oxidized components) in the beverage 117. Additionally, the flow through the cartridge 210 should not be so slow that it takes longer than the desired amount of time to pour a glass, or other consumption container, of the beverage. For example, in some embodiments, the filtration device 100 is configured such that the flow of beverage 117 though the device 100 can be in a range from 5 ml/s to 30 ml/s.

Because a vacuum can be formed in the beverage container 110 when the beverage 117 is being poured, the air tube extender 215 can be provided to allow air outside the container 110 to vent into the container 110 and thereby allow for continuous beverage delivery. The air tube extender 215 can be adjusted to have a length 220 so the hydrostatic head pressure from the beverage provides sufficient flow of the beverage through the cartridge. Additionally, the air tube extender 215 can be configured to be not so long that it will not allow the device 100 to be inserted into the beverage container. For example, in some embodiments, when the container 110 has a length 120 of 1.0 arbitrary length units (alu), and the portion of the stem body 105 inside the container has a length 122 in a range from about 0.2 to 0.6 alu, then the air tube extender 215 can have a length 220 in a range from about 0.7 to 0.3 alu.

The diameter 225 of the air tube extender 215 is configured to be large enough to allow an adequate volume of air to vent through the tube while pouring the beverage. But the inner diameter 225 is not so large as to allow the beverage to flow through the air tube and exit the vent hole 124 thereby creating a spillage of beverage. For example, in some embodiments, the air tube extender 215 can have a diameter 225 in a range from 0.15 inches to 0.30 inches. In some embodiments, the proximal end of the vent hole 124 is configured to have a reservoir 227 of sufficient size to accumulate any beverage that leaks down the air tube extender 215. In some embodiments, the housing 123 defining the vent hole 124 and reservoir 227 can have an igloo shape. In some embodiments, to facilitate providing the desired reservoir 227 volume, the housing 123 can have a channel length 237 in a range from about 0.3 to 0.4 inches.

Some embodiments of the stem body 105 can include a stem body air tube extender 230 having a distal end opening 231 configured to fit an end portion 232 of the air tube extender 215. The air tube extender 215 can be detachably connected to the stem body air tube extender 230 end opening 231 to facilitate providing a more compact length for packaging the device 100. The air tube extender 215 can be inserted into the distal end opening 231 of the stem body air tube extender 230 before the device 100 is inserted into the beverage container 110. In some embodiments, the stem body 105 can include a stop structure 233 near the distal end opening 231 (e.g., within about 0.4 to 0.6 inches from the distal end opening 231, in some embodiments). The stop structure 233 can be configured to prevent the air tube extender 215 from being inserted too deeply into the stem body 105. The air tube extender 215 is configured to fit into the stem body air tube extender's 230 distal end opening 231 tight enough to prevent leakage of air or beverage at the joint between the extender 215 and the distal end opening 231. The air tube extender 215 can be provided with a length 220 adequate to fit a particular beverage container 110 or range of beverage containers (e.g., upon trimming away portions of the tube from the distal end 234 of the air tube extender 215 to fit inside the container). In some embodiments, the distal end 234 of the air tube extender 215 can be tapered to prevent closure of the distal opening 234 if it comes in contact with the bottom of the beverage container 110.

The stopper module 112 is configured to attach around a collar 235 of the device stem body 105. The stopper module 112 can include or be composed of a material (e.g. silicone rubber) that is pliable (e.g., durameter range of about 40 to 60 Shore units) so as to attach and be firmly held in place around the collar 235 of the device stem body 105. Embodiments of stopper module 112 can include one or more ribs 140 encircling the stopper module 112. The ribs 140 help to form a tight seal between the mouth 107 of the beverage container 110 and the device 100 when the device is inserted into the beverage container. Embodiments of the stopper module 112 can have a smaller diameter 410 at the lower end and larger diameter 420 at the upper end of the stopper module to facilitate the stopper module to fit into a wide range of containers 110 with varying sizes of mouths 107.

Embodiments of the stem body 105 of the device 110 can have a rim 310 that is insertable into a ridge section 510 of the lid body 115 such that the rim 310 abuts against an interior lip 512. This insertion zone 320 is configured such that a tight seal can be formed between the rim 310 of the stem body and ridge section 510 of the lid body using technologies such as ultrasonic welding, heat welding or food grade adhesives such as silicone or epoxy. In other embodiments, the seal between the stem body and lid body can be formed using a compression snap fit, a gasket o-ring seal or a threaded connection (represented generally 330), or combinations thereof.

In some embodiments, the cap region 240 of the stem body 105 has a concave cupped shape such that a reservoir 245 is formed between the top 250 of the stem body 105 and the filter cartridge 210 to thereby facilitate the beverage being evenly distributed over the cartridge and avoid channeling of beverage through the cartridge during the filtration process.

The lid body 115 is configured to house the cartridge 210 therein and to facilitate delivery of the beverage 117 from the container 110 holding the beverage into another container for consumption. The interior of the lid body 115 has a ridge section 510 serving as ledge (e.g., via lip 512) for the cartridge 210 to contact and form a seal with such that the beverage does not bypass the cartridge during the filtration process.

The opening 145 in the top 147 of the lid body 115 is shaped and located to facilitate the beverage 117 being delivered into a consumption container without spillage or dripping. In some embodiments, to facilitate spill-free pouring, the opening 145 has an elliptical shape and the major axis of the ellipse 505 parallel to the direction 507 that the beverage is poured out of through the device 100. However in other embodiments, the opening 145 can have a circular, square, wedge, triangular or other shapes.

In some embodiments, the location of the lid opening 145 is about 180 degrees (e.g., in a range from 170 to 190 degrees in some embodiments) opposite to the location of the air vent opening 124 in the stem body 105. This configuration facilitates having the air vent opening 124 being oriented vertically when the beverage is being tilted to pour and filter the beverage into the consumption container, to help prevent beverage from draining down the air vent opening 124 thereby causing spillage. In some embodiments, alignment tabs 148, 149 (e.g., raised features or indentations in various embodiments) on the stem body 105 and lid body 115 can facilitate adjusting the relative orientations of the stem body and lid body so as to provide the desired about 180 degree orientation angle 150 (e.g., 180±10, or ±5 or ±1 degrees) between the lid opening 145 and air vent opening 124 to be achieved.

In some embodiments, the lid opening 145 includes a lip 152 located on a portion of an outer perimeter 155 of the lid top 147 housing the opening 145. The lip 152 can facilitate providing a clean, drip-free delivery of the beverage to the consumption container such that, e.g., drops of the beverage do not form and run down the sides 157 of the lid body 115 when the device is turned upright after the pour is completed. In some embodiments, the lip 152 can overlay about 1 to 20 percent of the total length of the lid top's 147 perimeter 155.

The cartridge's 210 size is designed to contain adequate resin to filter the desired amount of beverage and remove adequate amounts of undesired elements. In some embodiments, for example, for a 1 unit volume of beverage in a container the volume of resin in the cartridge can be in a range from 0.02 to 0.07 volume units. Non-limiting example suitable resin materials for inclusion in the cartridge are disclosed in Meadows. In some embodiments additional compounds can be included in the cartridge 210 for delivery to the beverage. Non-limiting examples include vitamins, flavor ingredients, nutraceuticals, etc.

The barrel wall 251 of the filter cartridge 210 can include or be composed of a solid material and the ends 252, 254 of the cartridge 210 are open with flanges 256 on each end. The flanges 256 facilitate the coupling of a filter fabric 257 to be sealed (e.g., using heat sealing or food grade adhesive sealants such as silicone or epoxy) to the ends 252, 254 of the barrel wall 251 and thereby contain the resin in the filter cartridge 210. The mesh size of the filter fabric to prevent the resin particles from leaking through, but still large enough to allow for easy flow of the beverage through the cartridge. For example in some embodiments, the mesh size is in a range from about 5 microns to 100 microns.

The cartridge 210, stem body 105 and lid body 115 and their component parts can be fabricated from a wide range of plastic or metal materials with various finishes and textures. Non-limiting example plastic materials include polypropylene, polyethylene, ABS, polycarbonate, or plexiglass. Such materials can include compatible colorant or surface coatings such as chrome, copper, silver, gold, titanium. In some embodiments these device components can be include or be composed of a range of renewable or biodegradable materials. In some embodiments these components can include or be composed of metal materials can be aluminum, brass, stainless steel, or composites.

One embodiment of the device 100 includes a stem body 105 and a lid body 115 having an internal housing 160 configured to hold an ion exchange resin-filed cartridge 210 therein, the lid body 115 having a connection end 162 and a top end 147 having an opening 145 therein.

The stem body 105 includes a cap region 240, a collar 235, a beverage conduit 262 and a stem body air tube 230. The cap region 240 is configured to couple to the connection end 162 of the lid body 115 to form a liquid-tight seal there-between. At least a first portion 164 of a wall 260 of the collar 235 is sized to fit inside a mouth 107 of a beverage container 110 and a second portion 166 of the wall 260 sized to be located outside of the mouth 164. The beverage conduit 262 spans the collar 235, where a first opening 264 of the conduit 262 opens to the coupling between the cap region 240 and the connection end 162, and, a second opening 266 of the conduit 262 opens to an interior of the beverage container 110 (e.g., such that the beverage 117 can flow through the openings 264, 266 through the cartridge 210 and opening 145 at the desired flow rate). The stem body air tube 230 extending through the collar 235, where a proximal opening 270 of the stem body air tube 230 opens to an air vent hole 124 located in the second portion 166 of the wall 260 of the collar 235, and, a distal opening 231 of the stem body air tube 230 opens to the interior of the beverage container 110.

In some embodiments of the device 100 the coupling between the cap region 240 of the stem body 105 and the connection end 162 of the lid body 115 form a reservoir 245 there between. In some such embodiments, the cap region 240 of the stem body 105 has a concave cupped shape interior surface 275 defining a portion the reservoir 245. Additionally or alternatively, in some such embodiments, the cap region 240 of the stem body 105 is rotationally adjustable relative to the connection end 162 of the lid body 115 such that an orientation of the lid opening 145 of the lid body 115 relative to an air vent opening 124 of the stem body 105 is adjustable. In some such embodiments, the stem body 105 and the lid body 115 each have alignment tabs 148, 149 and when the tabs 148, 149 are aligned with each other, an orientation of the lid opening 145 of the lid body 115 relative to an air vent opening 124 has an orientation angle 150 of about 180 degrees. For instance, in some embodiments, there can be one or more tabs 149 on the side 157 of lid body 115 and one or more tabs 148 on the collar 235 or on the stopper module 112 when present.

Embodiments of the device 100 can further include an air tube extender 215 configured to be detachably connectable to the stem body air tube 230. In some such embodiments, for a container 110 having an length 120 of 1 arbitary length unit, a portion of the stem body 105 inside the container 110 (e.g., the first portion 164 of the wall 260 and a lower portion of the stem body air tube 230, in or below the mouth 107) has a length 122 in a range from about 0.2 to 0.6 arbitary length units and the air tube extender 215 has a length 220 in a range from about 0.7 to 0.3 arbitary length units, respectively. In some such embodiments, the second opening 234 of the air tube 215 is more distal from the lid body 115 than the second opening 266 of the beverage conduit 262. E.g., the second opening 234 of the air tube extends farther into beverage container 110 than the second opening 266 of the beverage conduit 262.

For any such device 100 embodiments, the collar 235 can be sized such that the wall 260 portion 164 that fits inside of the container's mouth 107 directly forms a liquid seal to the mouth 107.

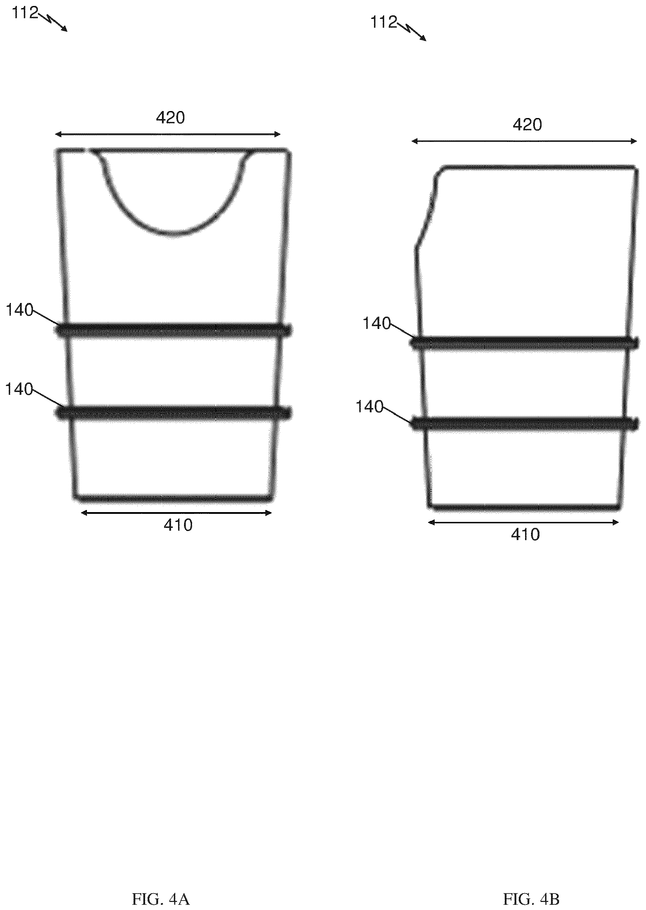

However, in other embodiments, the device can further including a stopper module 112 configured to attach around the outer wall 260 of the collar 235, where the stopper module 112 is configured to form a liquid seal between the mouth and the collar 235 when the stem body 105 is inserted into the mouth 107. In some such embodiments, the stopper module 112 can have a smaller outer diameter 410 at the lower end of the stopper module 112 (the end most proximate to the interior of the container 110) and larger outer diameter 420 at the upper end of the stopper module (the end most distal to the interior of the container 110). As illustrated in FIGs. 4A-4B, to facilitate fitting into a variety of different diameter mouths 107, the stopper module 112 can be gradually tapered from its larger top outer diameter 420 to its smaller lower outer diameter 410. In some such embodiments, the stopper module 112 includes one or more ribs 140 encircling the stopper module 112.

For any such embodiments of the device 100, the connection end 162 of the lid body 115 can include an interior ridge section 510, and, the cap region 240 can include a rim 310 insertable into the ridge section 510 to abut against an interior lip 512 of the ridge section 510 and thereby form the coupling between the cap region 240 and the connection end 162. In some such embodiments, the coupling between the interior ridge section 510 and an insertion zone 320 of the rim 310 can include an ultrasonic weld, a heat weld, a silicone or epoxy adhesive, a compression snap fit, a gasket o-ring seal, a threaded connection or combination thereof.

For any such embodiments of the device 100, the connection end 162 of the lid body 115 can includes an interior ridge section 510 that forms a liquid-tight seal with the cartridge 210 such that the beverage 117 does not bypass the cartridge 210 when being poured out of the device 100 (e.g., as part of the beverage the filtration process).

For any such device 100 embodiments, the opening 145 in the top end 147 of the lid body 115 is elliptically shaped with a major axis 505 of the ellipse 505 being parallel to a direction 507 that the beverage 117 is poured out of through the device 100. In some device 100 embodiments, the opening 145 in the top end 147 of the lid body 115 includes a lip 152 located on a portion of an outer perimeter 155 of the top end 147. For some such embodiments, the lip 152 overlays about 1 to 20 percent of the total length of the top end 147 perimeter 155.

In any device 100 embodiments, for a 1.0 volume unit of beverage 117 stored in the beverage container 110, a volume of an ion exchange resin material in the filter cartridge 210 can be in a range from 0.02 to 0.07 volume units.

For any such embodiments of the device 100, the filter cartridge 210 can include a barrel wall 251 and flanges 256 coupling a filter fabric to ends 252, 254 of the filter cartridge 210 to contain an ion exchange resin material therein. In some such embodiments, a mesh size of the filter fabric is in a range from about 5 microns to 100 microns.

### Examples

We describe below an embodiment of the filtration device 100 as used to treat a 25 oz (739 ml) bottle of wine.

Resin particles such as described in Meadows ranged in size (diameter) from 100-250 microns were loaded into a cartridge 210 to provide a 30 ml volume of particles. An air tube extension 215 of 7.25 inches in length 220 and 0.25 inches in diameter 225 was attached to the stem body 105. The housing 123 of the stem body defining the air vent opening 124 had a channel length 237 of 0.35 inches and the air vent opening had a diameter 238 of about 0.25 inches. The reservoir space 245 volume equaled about 5 ml. The elliptical shaped lid opening 145 had a long axis length of about 0.5 inches and short axis length of about 0.3 inches. The wine was poured out of the device 100 at a rate of about 15 ml/sec. The percentage reduction in the noxious elements, i.e., preservatives, biogenic amines and oxidized components, in the filtered wine as compared to the unfiltered wine was at least about 25 percent.

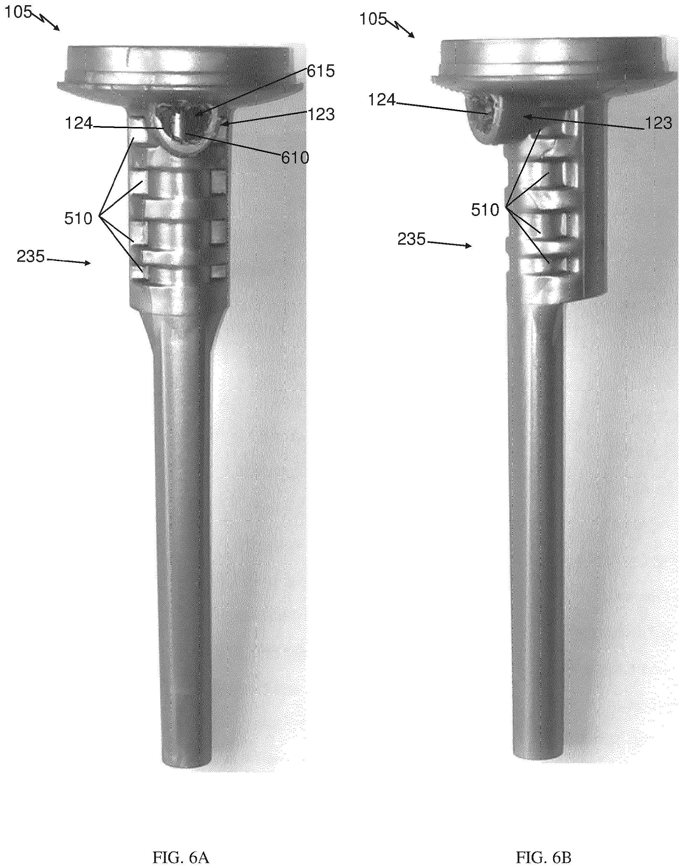

FIGs. 6A-10 present photographs of component prototypes of the beverage filtration device 100.

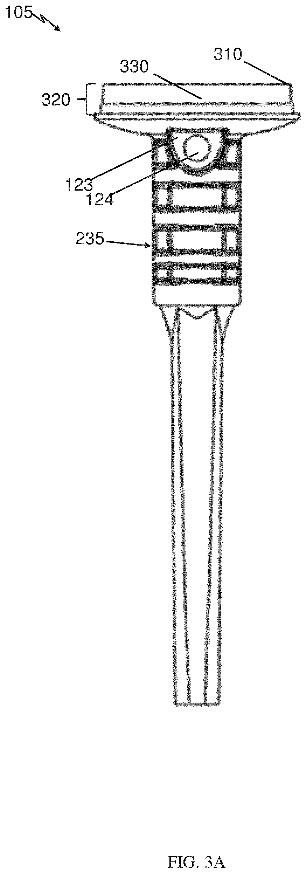

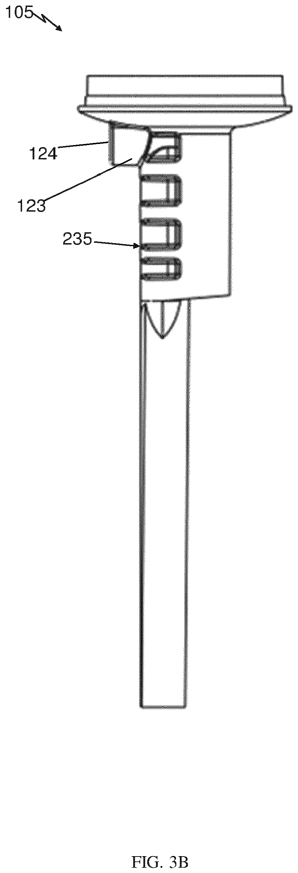

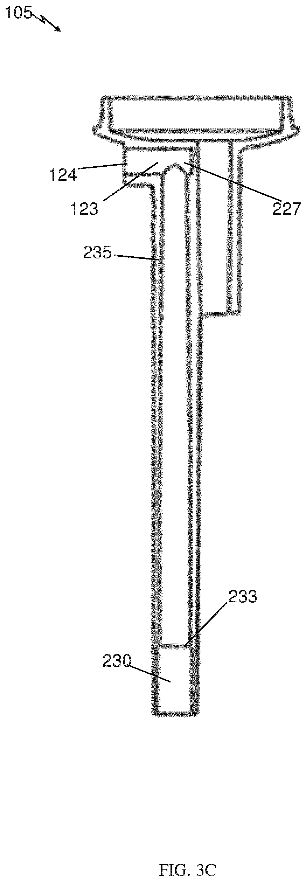

With continuing reference to FIGs. 1A-5B throughout, FIG. 6A shows a front side photograph of an example stem body 105 of the device 100 and FIG. 6B shows a left side view of the example stem body 105 shown in FIG. 6A. As illustrated in FIGs. 6A-6B, the stem body collar 235 has groves 510 (similarly depicted in FIGs. 3A-3B) to improve stopper module 112 molding thereto.

Further illustrated in FIG. 6A-6B is a igloo shaped air vent housing 123 having a fan 610 to form a beverage disengagement or disentrainment zone 615 to facilitate self draining. That is, the igloo shaped air vent housing 123 has a negatively-sloped fan 610 configured help beverage entering the opening 124 and accumulating in the zone 615 and on the fan 610 to drain back down the stem body air tube 230 and air tube extender 215 and into the container 110.

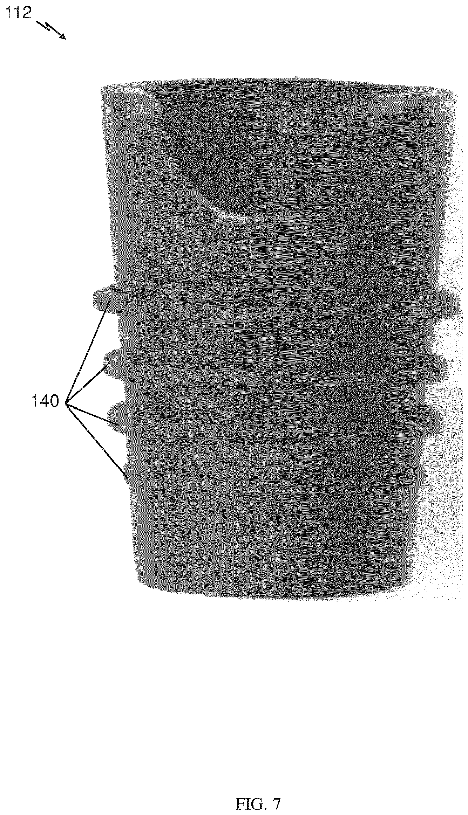

FIG. 7 shows a front side photograph of an example stopper module 112 of the device 100. The rubber stopper module 112 was made out of a soft elastomer material (e.g., durometer 50 Shore units) with four ribs 140 and was tapered such as depicted and discussed in the context of FIGs. 4A-4B, to facilitate providing a universal fit to a broad range of wine bottle containers 110 irrespective of the size of the mouth 107.

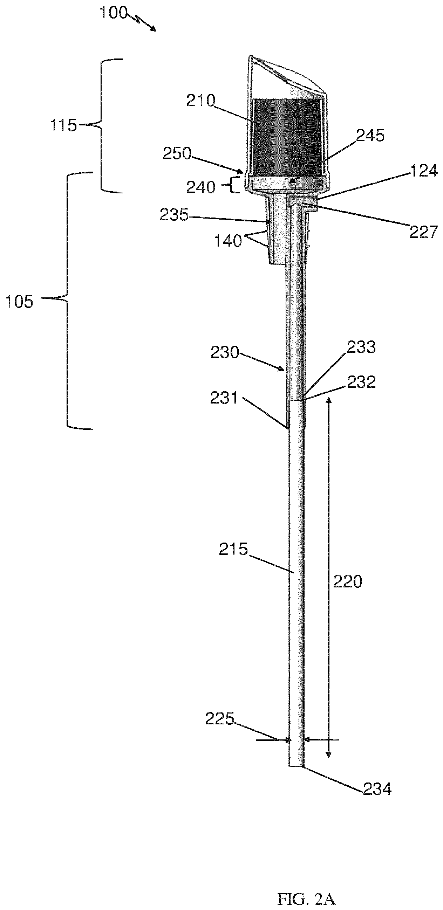

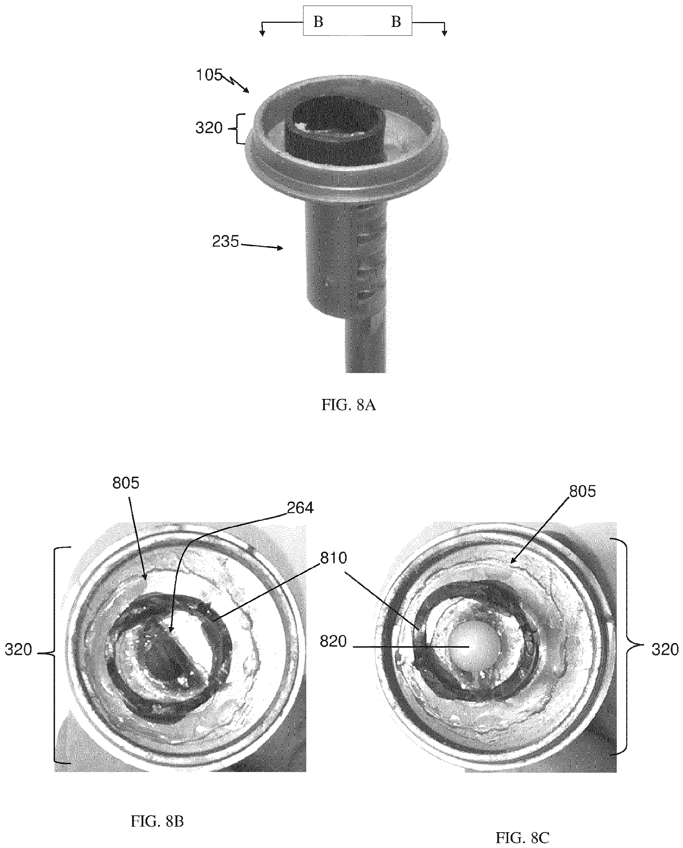

FIG. 8A shows a right side upper perspective photograph of the example stem body 105 shown in FIG. 6A. FIGs. 8B and 8C show top down photographs of the stem body 105 shown along view line B-B in FIG. 8A. FIG. 8B shows a check valve assembly 805 including a containment ring 810 situated in an interior of the insertion zone 320 of the stem body 105, the ring 810 and surrounding the first opening 264 of the conduit 262 that passes through the collar 235 of the stem body 105 (see e.g., FIG. 2A-2B). Fig 8C illustrates a valve ball 820 of the assembly 805 (e.g., a nylon ball, part no. 9P71-10, Designatronics, Inc. Hicksville, NY) covering the opening 264 and surrounded by the ring 810. The ring 810 is sized to serve as a containment zone for the ball 820 and the ball 820 size was selected to plug the first opening 264. After a first dispensing (to pour beverage 117 out though the device's opening 145) and returning the container 110 to a vertical orientation (e.g., as shown in FIG. 1A) gravity causes the beverage 117 to drain towards the stem body air tube extender 230 to thereby form a hydrostatically pressurized container 110. Pressurization of the container 110 in turn can cause beverage to not flow out of the device 100 in a second dispensing. The ball 820 helps to prevent this pressure build up by limiting the amount of beverage 117 that can drain from the cartridge 210 back into the beverage container 110.

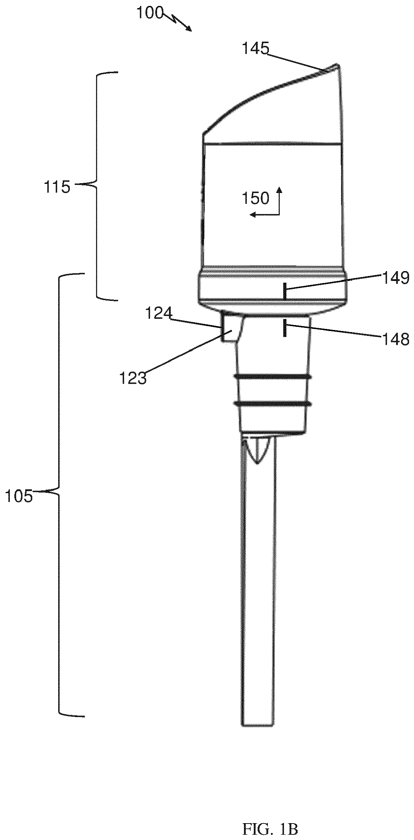

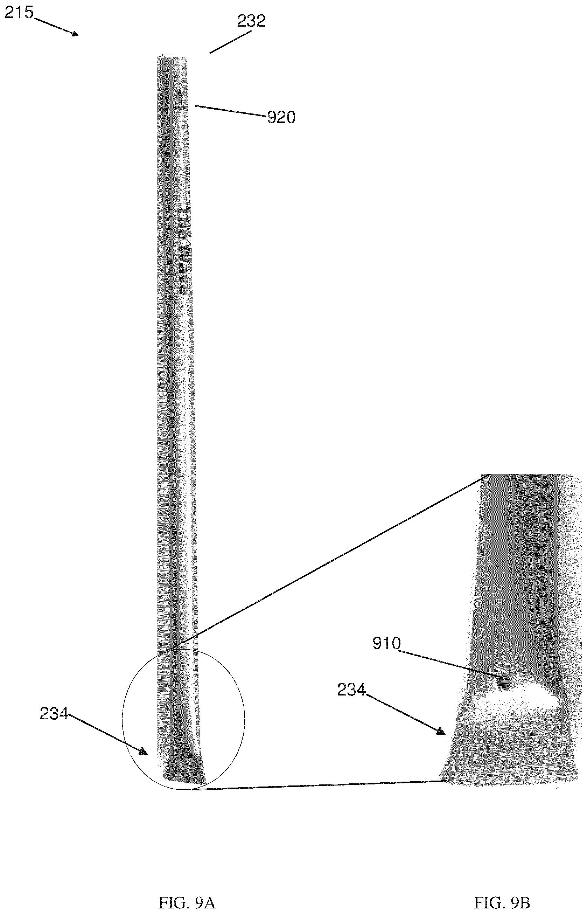

FIG. 9A shows a photographic view of an example embodiment of the air tube extender 215 of the device 100 and FIG. 9B shows a detailed view of a distal end 234 of the air tube extender 215 show in FIG. 9A. As discussed above in the context of FIG. 2A-2B the distal end 234 of the air tube extender 215 can be tapered. For the air tube extender 215 embodiment shown in FIG 9A-9B, the distal end 234 was heat sealed to form a sealed tapered distal end 234. The tapered distal end 234 helps to mitigate a compression wave of beverage from coming back up from the bottom of the container 110 (e.g., from a dimpled punt region 170 such as shown in FIG. 1), through the air tube extender 215 and the stem body air tube 230, when the container 110 is set back down into a vertical orientation (e.g., FIG. 1A) after tilting the container 110 to pour beverage 117 out of the device's 100 opening 145. A beverage compression wave could undesirably result in projection or "burping" of beverage out of the air vent hole 124. However, to allow air to still vent into the container 110, one or more dampening holes 910 (e.g., two circular holes each having a diameter of about 0.25 mm on either side of the tapered distal end 234) can be made in the heat sealed-tapered distal end 234 of the air tube extender 215. The dampening holes 910 help to provide fluid mechanical dampening of the beverage compression wave to mitigate beverage projection out of the air vent hole 124. As further illustrated in FIG. 9A, an indicator mark 920 can be provided near the proximal end 232 of the air tube extender 215 to facilitate a user of the device 100 to insert the proximal end 232 a desired distance into the distal end 231 of the stem body air tube 230.

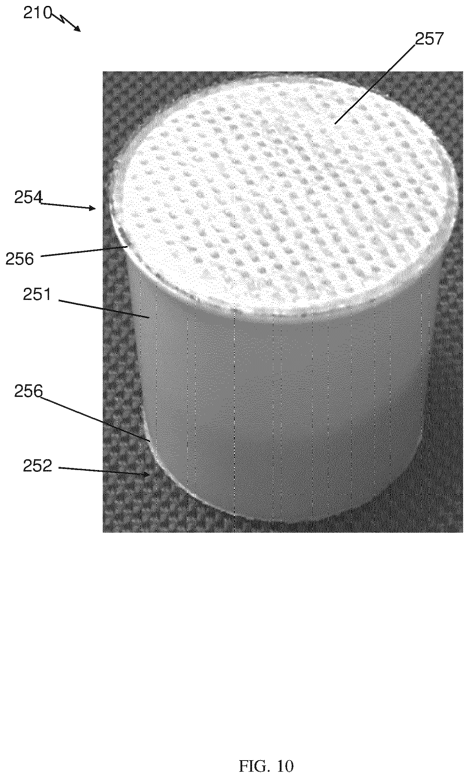

Fig 10 shows an upper perspective view of a cartridge 210 to be housed inside the lid body 115 of the device 100. The plastic barrel wall 251 of the cartridge was formed by injection molding. After the outside barrel wall 251 was formed, it was filled with the ion exchange resin and porous polypropylene fabrics were welded to both the bottom and top ends 252, 254 of the cartridge 210 to hold the resin therein.

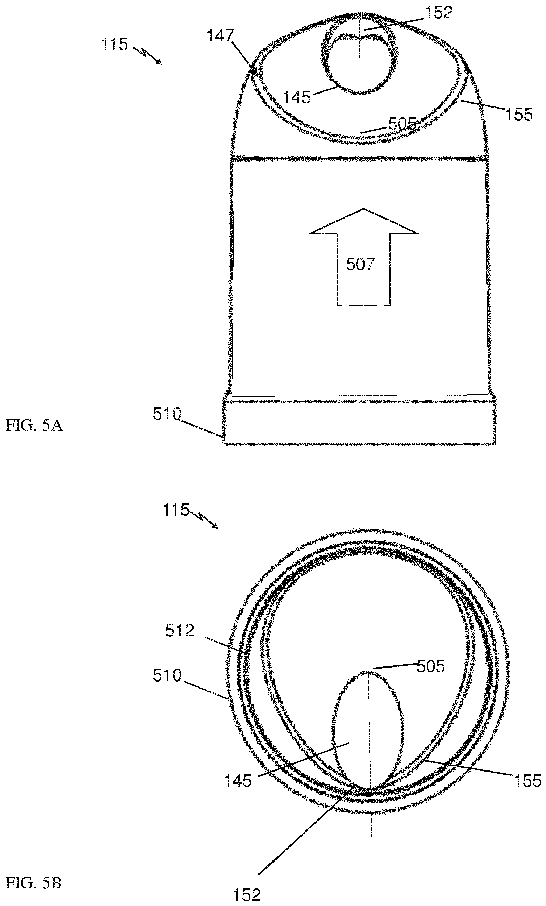

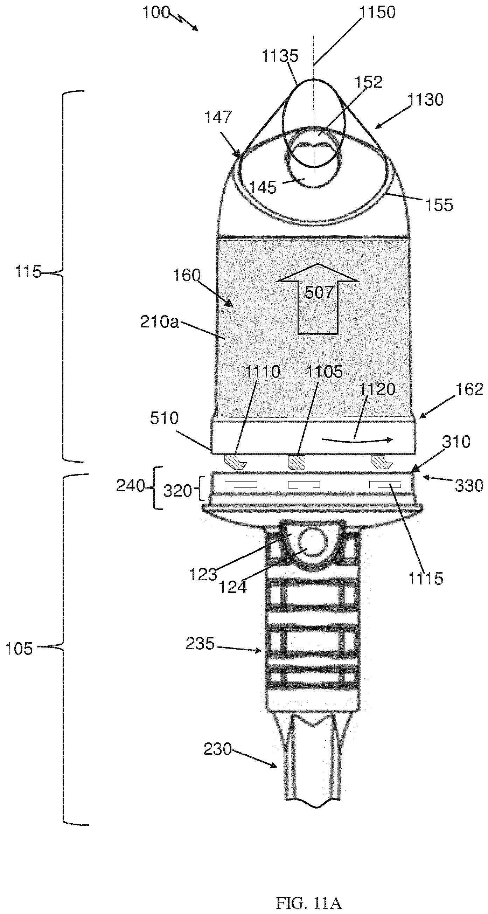

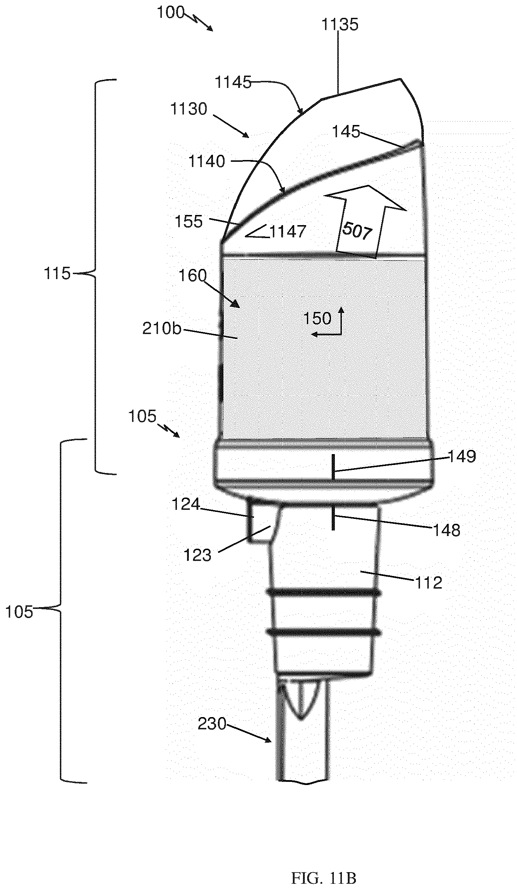

Aspects of other embodiments of the device 100 are further illustrated in FIGs. 11A-11B. FIG. 11A shows a front side view of a portion of an example embodiment of the beverage filtration device 100 similar to the view shown in FIG. 1A and 5A after disconnecting the lid body 115 and the stem body 105 of the device. For clarity, the air tube extender 215 and lower portions of the stem body air tube extender 230 are not depicted. FIG. 11B shows a left side view of the example embodiment of the beverage filtration device shown in FIG. 11A after replacement of the cartridge (e.g., cartridge 210A, FIG. 11A) with a new cartridge (e.g., cartridge 210B, FIG. 11B) and reconnecting the lid body 115 and the stem body 105. Unless otherwise indicated, the device embodiments hereafter disclosed in the context of FIGs. 11A-11B could include any aspects of the device such as disclosed in the context of FIGs. 1A-10.

For instance, as noted in the context of FIGs. 1A-10, for some embodiments of the device 100, the connection end 162 of the lid body 115 can includes an interior ridge section 510 and the cap region 240 of the stem body 115 can include a rim 310 insertable into the interior ridge section 510 to abut against, e.g., an interior lip 512 of the ridge section 510 (e.g., FIG. 5B) to form the coupling 330 between the cap region 240 and the connection end 162 and thereby form the liquid-tight seal coupling 330. As also noted, such liquid-tight seal couplings 330 between the interior ridge section 510 and the insertion zone 320 of the rim 310 (e.g., FIG. 3A) can include one or more of a compression snap fit, a gasket o-ring seal, or a threaded connection to facilitate forming an adjustable coupling, e.g., to adjust the relative orientations of the stem body 105 and lid body 115 so as to provide the desired orientation angle 150 between the lid opening 145 and air vent opening 124. The adjustable coupling can also facilitate the reversible insertion of the rim 310 into, or removal of the rim 310 from, the interior ridge section 510 to thereby provide a reversible connection/disconnection between the lid body 115 and the stem body 105.

Having such a reversible liquid-tight seal coupling 330 facilitates the removal and replacement of a used cartridge (e.g., cartridge 210A, FIG. 11A) with a new unused cartridge (e.g., cartridge 210B, FIG. 11A) to thereby extend the utility lifetime of the device 100 and reduce environmental waste.

In some such embodiments, the cap region 240 of the stem body 105 and the connection end 162 of the lid body 115 can be adjustable relative to each other such that the lid body 115 and the stem body 105 are reversibly coupled. For instance, the ion exchange resin-filed cartridge 210 can be removed from the internal housing 160 when the lid body 115 and the stem body 105 are uncoupled by disconnecting the interior ridge section 510 of the connection end 162 and an insertion zone 320 of the rim 310 from each other.

In some such embodiments, to facilitate reversible coupling and the rotational adjustability of the stem body 105 and the lid body 115 relative to each other, the threaded connection between the interior ridge section 510 and the insertion zone 320 can include the interior ridge section 510 of the connection end 162 of the lid body 115 having one or more raised alignment tabs 1105 or clamping hooks 1110. The threaded connection can also include the insertion zone 320 of the stem body 105 having one or more slots 1115, each of the raised alignment tabs or clamping hooks 1105, 1110 insertable into one of the slots 1115. Thus when the connection end 162 and the insertion zone 320 are rotated relative to each other, the liquid-tight seal coupling 330 is formed, e.g., by locking the clamping hooks 1105 into their corresponding slots. In some such embodiments, when the connection end 162 and the insertion zone 320 are rotated relative to each other with the raised alignment tabs or clamping hooks 1110, 1115 each inserted into one of the slots 1115 (e.g., e.g., rotation through a rotation angle 1120 of 10 to 30, 10 to 20 or 15° degrees), the rotation adjusts the lid opening of the lid body relative to an air vent opening to have substantially the desired orientation angle 150 of about 180 degrees. Such embodiments can thereby relieve an end-user of the device 100 the burden of remembering to align the alignment tabs 148, 149 with each other to achieve the desired orientation angle 150, although the inclusion of the alignment tabs 148, 149 can still provide a more precise orientation by the end-user.

As illustrated in FIG. 11A-11B, the lid body 115 of the device 100 can further include a pouring spout body 1130 coupled to, and encompassing, the outer perimeter 155 of the top end 147 of the lid body 115, e.g., to facilitate guiding the pouring direction 507 of the beverage 117 (after exiting the cartridge 210) and to minimizing spillage of the beverage 117 while being poured out of the device 100. The pouring spout body 1130 can be made of any of the same plastic or metal materials as the cartridge 210, stem body 105 or lid body 115. In some embodiments the pouring spout body 1130 can be made of a copolyester polymer and may have a fluoroelastomeric over-molding. As non-limiting example, 1 to 3 mm thick walls forming the pouring spout body 1130 can be made of triton, polypropylene, polyethylene, ABS, polycarbonate, or plexiglass, and in some embodiments, a transparent plastic or other transparent material, e.g., to provide a viewable transparent pouring zone. Embodiments of the pouring spout body 1130 be coupled to the perimeter 155 via an ultrasonic weld, a heat weld, or combination thereof to form a liquid tight seal.

As further illustrated, to help guide the pouring direction 507, a spout opening 1135 of the pouring spout body 1130 can be located on the side of the outer perimeter 155 that is proximate to the opening 145 in the top end 147. As illustrated the exterior surface 1140 of the top end 147 slopes upwards towards the side of the top 147 with the opening 145 and the spout opening 1135 itself, similar to the top opening 145, can slope upwards towards the perimeter 155. Similarly, portions of an exterior surface 1145 of the pouring spout 1130 can slope upwards (e.g., upward slope angle 1147 ranging from 10 to 70, 20 to 50 or 40 to 50 degrees in some embodiments) towards the side of the outer perimeter 155 proximate to the opening 145 and the spout opening 1135 itself can slope upwards towards side of the perimeter 155 proximate to the opening 145.

As also illustrated, to facilitate guiding the pouring direction 507 of the beverage 117 out of the device 100 and to minimize beverage spillage, the spout opening 1135 can be elliptically-shaped such that a major axis 1150 of the elliptically-shaped spout opening 1135 is aligned with the major axis 505 of the elliptically shaped opening 145, and thereby aligned with the pouring direction 507.

While the reversible coupling aspects of the device 100 embodiments discussed in context of FIG. 11A-11B facilitate cartridge replacement, there may be undesirable beverage spillage during cartridge removal and replacement for some such embodiments. We discovered that to remove and replace a cartridge 210 from the device it is often desirable to take the device 100 out of the beverage container 112 that it was in and then invert the device 100, e.g., to help avoid having the cartridge 210 fall out of the lid body 115 when the lid body 115 and stem body 105 are uncoupled from each other. The potential for beverage spillage exists when removing the device 100 from the beverage container 112, e.g., due to beverage on the sides or inside the air tube extender 215 and the stem body air tube extender 230. Beverage spillage may also occur due to beverage leaking out of the lid body 115 or the stem body 105 when the device 100 is inverted, or, due to beverage leaking out of the cartridge 210 when the cartridge 210 is shaken out of, or otherwise removed from, the lid body 115.

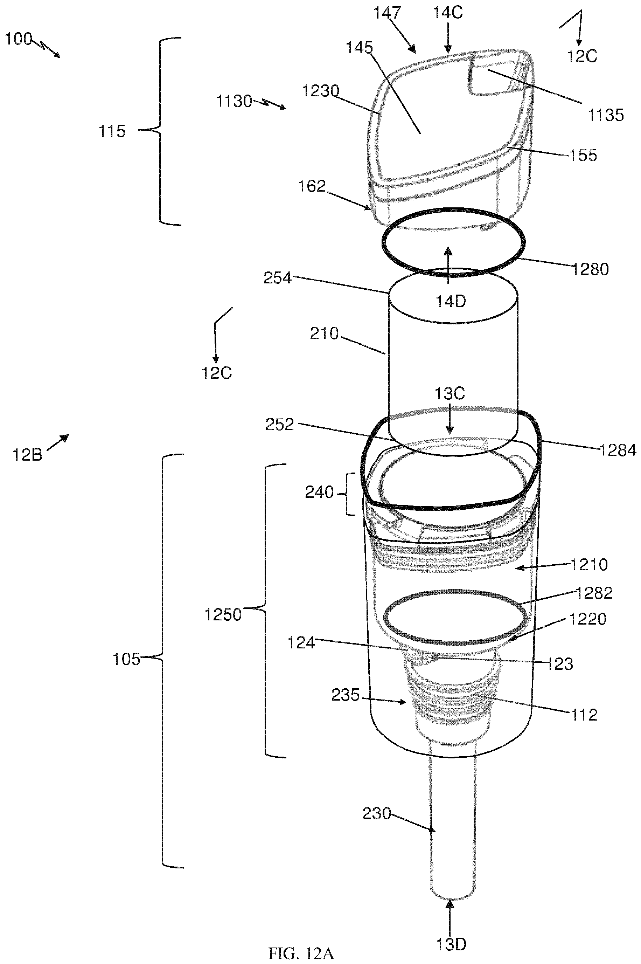

To address such problems, we disclose another beverage filtration device 100 embodiment, where instead of being housed inside the lid body 115, the cartridge 210 is housed inside the stem body 105. That is the cartridge housing in the device is in a completely different body than the device embodiments shown in FIGs. 1A-11B. FIGs. 12A-15B illustrates various aspects of example embodiments of such a device 100. In some of these drawings, for clarity, some device components are depicted as being transparent or semi-transparent so that the position and orientation of underlying device components can be presented. However, in some embodiments, such device components may be opaque in the device 110, e.g., to cosmetically obscure such underlying device components.

With continuing reference to FIGs. 1A-11B throughout, as shown in FIGs. 12A-12C, the beverage filtration device 100 includes a lid body 115 and a stem body 105. The lid body 115 includes a connection end 162, a top end 147 having an opening 145 therein and a pouring spout body 1130 encompassing the opening 145. The stem body 105 includes an internal housing 1210 configured to hold an ion exchange resin-filed cartridge 210 therein. The stem body 105 also includes a cap region 240 configured to couple to the connection end 162 of the lid body 115 to thereby form a first liquid-tight seal coupling 330a between the connection end 162 of the lid body and a top end 254 of the ion exchange resin-filed cartridge 210 (e.g., a top flange 256 of the top end 254 of the cartridge barrel wall 251, FIG. 10). Coupling the connection end 162 and the cap region 240 also thereby forms a second liquid-tight seal coupling between a bottom end 252 of the ion exchange resin-filed cartridge 210 and a base region 1220 of the internal housing 1210 (e.g., a bottom flange 256 of the bottom end 252 of the cartridge barrel wall 251, FIG. 10).

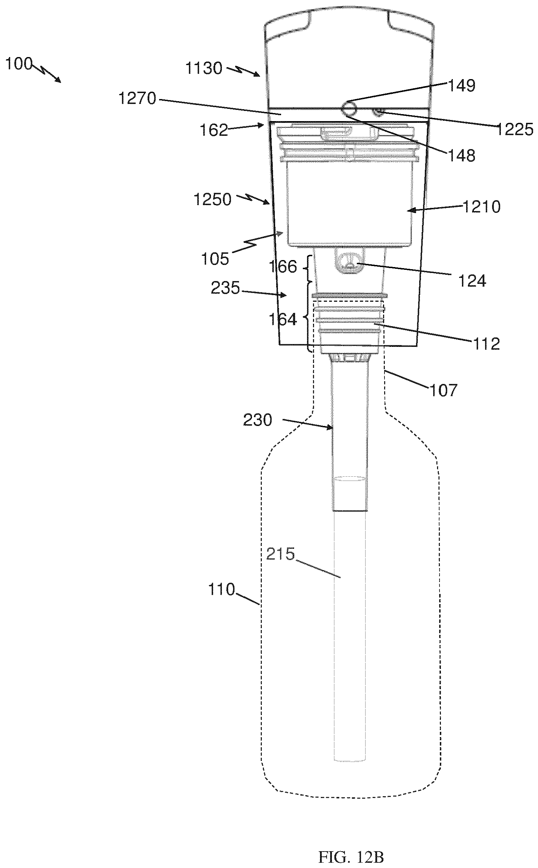

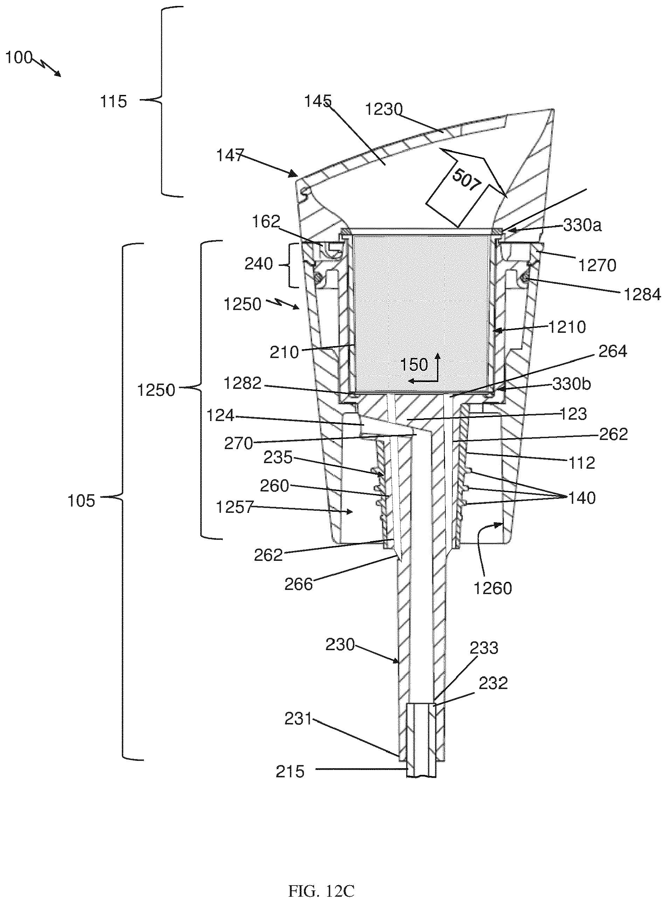

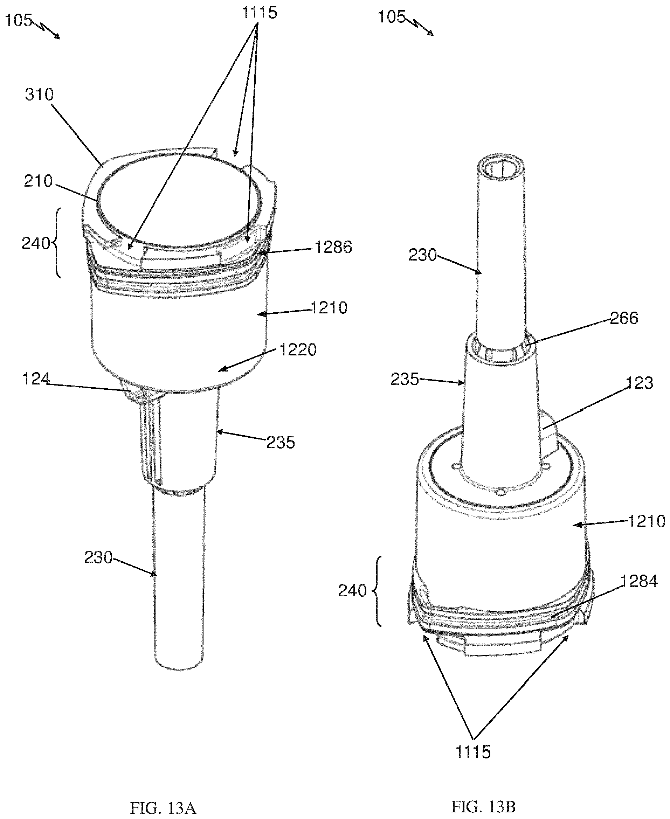

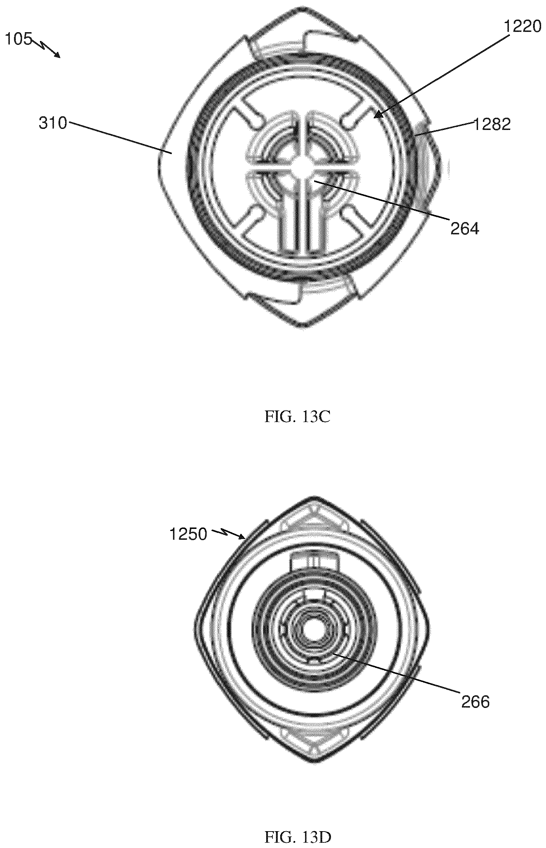

The stem body 105 also includes a collar 235. A first portion 164 of a wall 260 of the collar 235 is sized to fit inside a mouth 107 of a beverage container 110 and a second portion 166 of the wall 260 sized to be located outside of the mouth 107 (FIG. 12B). The stem body 105 includes a beverage conduit 262 (FIG. 12C) spanning the collar 235. A first opening 264 of the conduit 262 opens to the base region 1220 of the internal housing 1210 (FIGs. 12C, 13C) and a second opening 266 (FIGs. 12C, 13B) of the conduit 262 opens to an interior of the beverage container 110, and, a stem body air tube 230 extends through the collar 235. Embodiments of the beverage conduit 262 can be concentric with and substantially surround the stem body air tube 230 except in the vicinity of the proximal opening 270 of the air tube 230 that opens to the air vent hole 124. The proximal opening 270 (FIG. 12C) of the stem body air tube 230 that opens to the air vent hole 124 is located in the second portion 166 of the wall 260 of the collar 235 (FIG. 12B), and a distal opening 231 of the stem body air tube 230 opens to the interior of the beverage container 110(FIG. 12C).

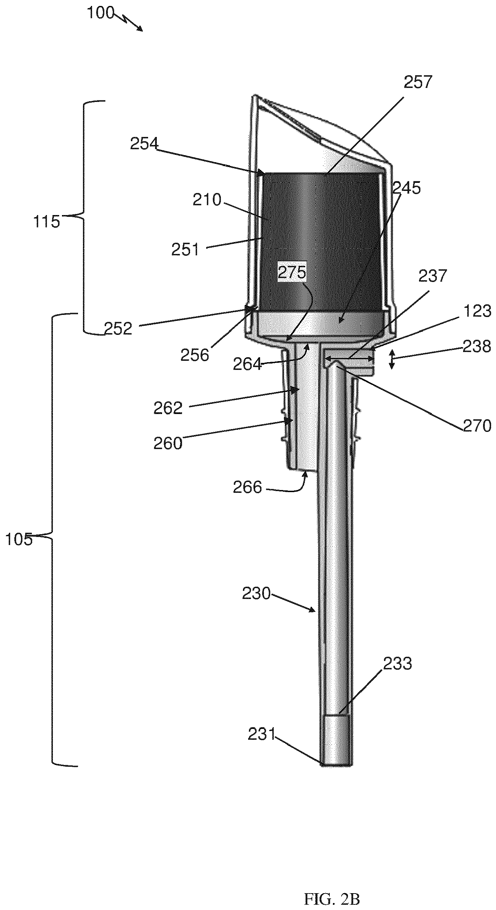

Unless otherwise indicated (e.g., a stem body internal housing 1210 instead of a lid body internal housing 160), the device embodiments disclosed in the context of FIGs. 12A-15B could also include any aspects of the device such as disclosed in the context of FIGs. 1A-11B. As non-limiting examples, the liquid-tight seal coupling 310a between the cap region 240 of the stem body 105 and the connection end 162 of the lid body 115 can form a reservoir 227 there-between (FIG. 2A). The cap region of the stem body can have a concave cupped shape interior surface 275 defining a portion the reservoir (FIG. 2B). For example, the cap region 240 of the stem body 105 can be rotationally adjustable relative to the connection end 142 of the lid body 115 such that an orientation angle 150 of the lid opening 145 of the lid body 115 relative to an air vent opening 124 of the stem body 105 is adjustable (FIG. 1B, 11A-11B, 12C). For example, the stem body 105 (or an optional overlying outer housing body) and the lid body 115 can each have alignment tabs 148, 149 (FIG. 1B, 11B, 12B), and/or alignment opening 1225, such that when the tabs 148, 149 are aligned with each other, an orientation of the lid opening 145 of the lid body (and pouring spout opening 1135) relative to an air vent opening 124 can have an orientation angle 150 of about 180 degrees. For instance the device 100 can include an air tube extender 215 detachably connectable to the stem body air tube 235 and the portion of the stem body 105 inside the container 110 can have the length 120 (FIG. 1A) and the air tube extender 215 the length 220 (FIG. 2A) as previously disclosed, and, the air tube extender second opening 234 (FIG. 2A) more distal from the lid body 115 than the second opening of the beverage conduit 266. For instance, the device 100 can include any embodiments of the stopper module 112 disclosed herein.

For embodiments of the device 100 discussed in the context of FIG. 12A-15B, the cap region 240 of the stem body 105 and the connection end 162 of the lid body 115 can be adjustable relative to each other such that the lid body 115 and the stem body 105 are reversibly coupled, e.g., to facilitate cartridge 210 replacements. However, for other embodiments of the device 100, the cap region 240 of the stem body 105 and the connection end 162 of the lid body can be an irreversible coupling, e.g., formed by an ultrasonic weld, a heat weld, or combination thereof of the cap region 240 and the connection end 162.

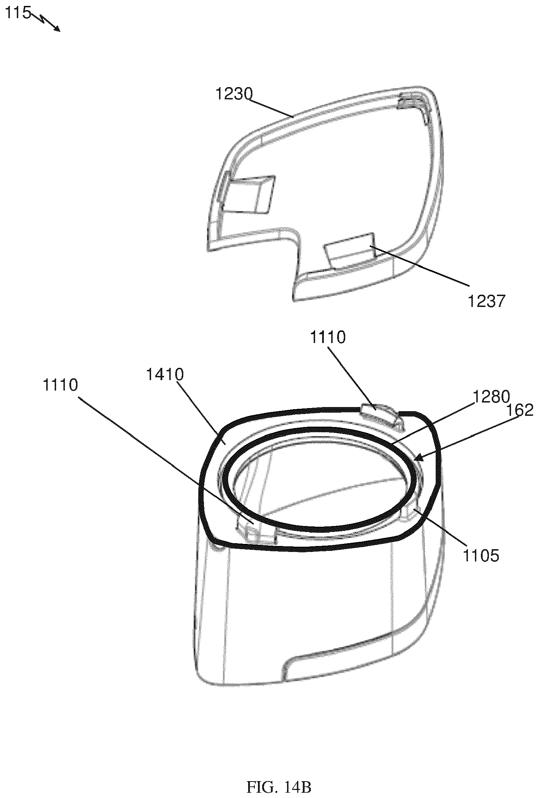

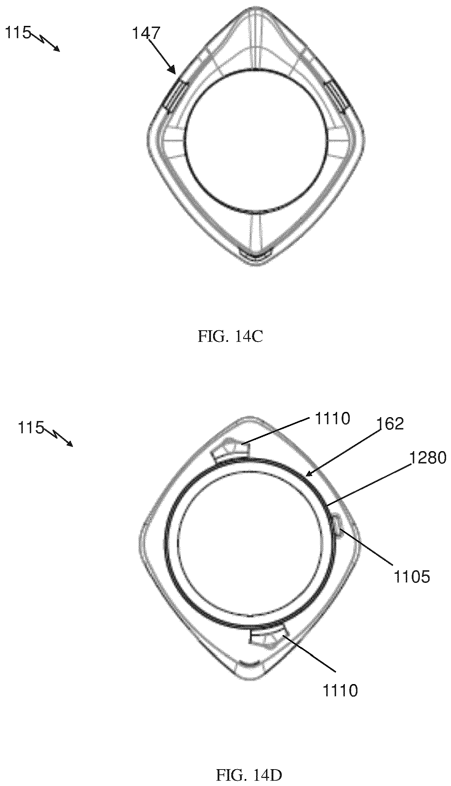

In some embodiments, the first liquid-tight seal coupling 330a between the connection end 162 and the cap region 240 can include a compression snap fit, a gasket o-ring seal, a threaded connection or combination thereof to form the reversible coupling. In some such embodiments, the threaded connection can include a surface 1410 (FIG. 14B) of the connection end 162 facing the cap region 240 having one or more raised alignment tabs 1105 or clamping hooks 1110, and, a rim 310 of the cap region 240 having one or more slots 1115 (FIG. 13A). Each of the raised alignment tabs or clamping hooks 1105, 1110 are insertable into one of the slots 1115 such that when the connection end 162 and the cap region 240 are rotated relative to each other, the first and second liquid-tight seal couplings 330a, 330b are formed.

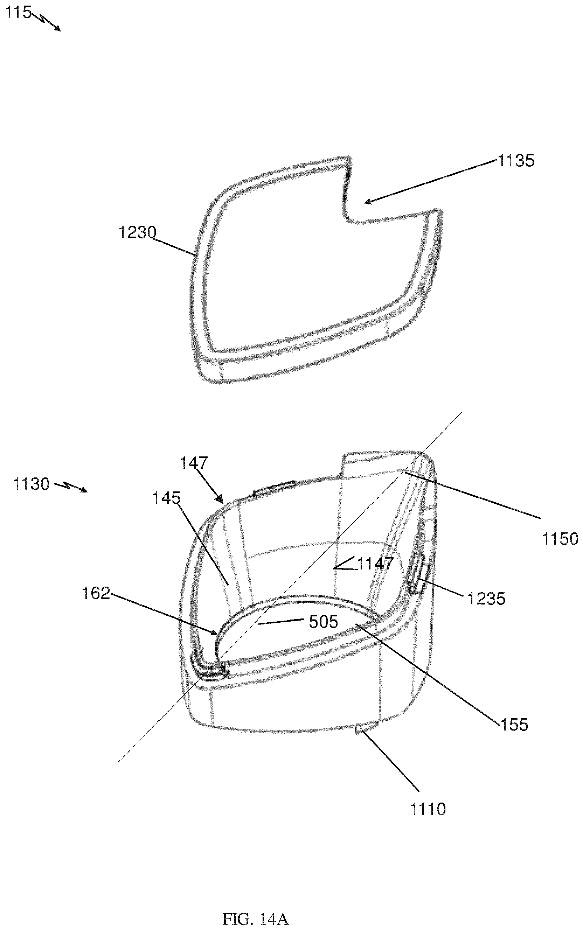

While for some embodiments of the lid body 115, the pouring spout body 1130 can be reversibly coupled to the connection end 162 similar to that discussed in the context of FIGs. 11A-11B, in other embodiments, the pouring spout body 1130 and the connection end 162 can be made of a single continuous piece (e.g., a molded plastic lid body 115) such as illustrated in FIGs. 12-A-12C and 14A-14B.

Similar to the embodiment discussed in the context of FIG. 11A-11B, as illustrated in FIGs. 12A-12B and 14A, the opening 145 in the top end 147 of the lid body 115 can be elliptically shaped with a major axis of the ellipse 505 being parallel to a direction 507 that the beverage is poured out of through the device 100. In some embodiments, the spout body 1130 can further include a cap body 1230 attachable to the pouring spout body 1130 (e.g., via snap fittings 1235, 1237 on the top end 147 and/or the cap body 1230) to thereby form the spout opening 1135, e.g., an opening 1135 that is smaller than the top end opening 145 and less prone to beverage spillage. In some embodiments, to further reduce spillage, the spout opening 1135 of the spout body 1130 can be elliptically shaped with a major axis 1150 of the ellipse being parallel to the major axis 505 of the elliptically shaped 145 and hence also parallel to the pouring direction 507 (FIGs. 12C, 14A).

As illustrated in FIG. 14A-14B, in some embodiments, an outer perimeter 155 of the top end 147 of the lid body 115 is elliptically-shaped and the connection end 162 of the lid body 115 is circularly-shaped. This can facilitate rotational adjustment and reversible coupling between a circularly shaped cap region 240 of the stem body 105 and the circularly-shaped connection end 162 of the lid body 115, e.g., to provide the desired orientation angle 150 between the lid opening 145 and air vent opening 124 and cartridge replacement.

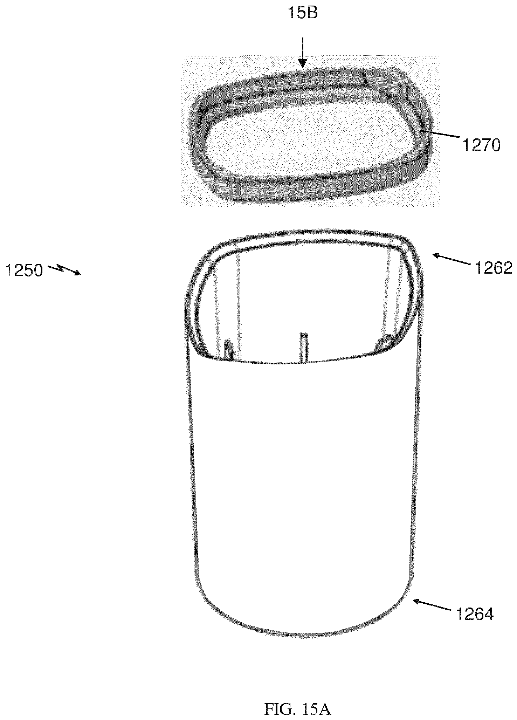

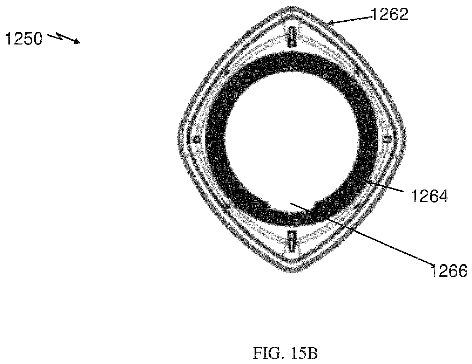

As further illustrated in FIG. 12A-12C and 15A-1B, embodiments of the device 100 can further include an outer body 1250 secured to the stem body 105 and holding the stem body 105 therein, e.g., to cosmetically obscure at least portions of the stem body 105 and the connection end 162 of the lid body 115 when coupled to the stem body 105. The outer body 1250 can be made of any of the same materials as used for the stem body 105 and lid body 115 and is some embodiments can be made of a copolyester polymer having a polished high gloss outer surface 1255 to provide a cosmetically pleasing appearance. The outer surface 1255 of the outer body 1250 can provide a gripping surface to facilitate an end-user to grasp and insert or remove the device 100 from the beverage container 110. The outer body 1250 can be shaped to provide an air gap 1257 between the stem body 105 and an inner wall 1260 of the outer body 1250 (FIG. 12C), e.g., so as not to restrict air flow through the vent hole 124. In some embodiments, the outer body 1250 can have a top end 1262 with an elliptical shape, e.g., to provide a smooth surface transition between the outer body 1250 and an elliptically shaped pouring spout body 1130. A bottom end 1264 of the outer body 1250 can have a circular shape, e.g., to facilitate fitting onto a cylindrically shaped container 112. In some embodiments, the cylindrically shaped bottom end 1264 can be shaped to have an opening 1266 to permit the vent hole housing 123 of the stem body 105 there-though. In some embodiments, the base region 1220 of the stem body 105 can be fixed to the bottom end 1264 of the outer body 1250 (e.g., via ultrasonic welding, heat welding or food grade adhesives such as silicone or epoxy). Some embodiments of the outer body 1250 can include a trim ring 1270 (FIGs. 12B, 12C, 15A) configured to hold the cap region 240 of the stem body 105 therein and provide a smooth outer surface transition from the lid body 105 to the stem body 105 or the outer body 1250.

Embodiments of the device 100 shown in FIGs. 12A-15B have at least tandem first and second liquid-tight seal couplings 330a, 330b. To facilitate forming such couplings 330a, 330b, the device 100 can further include gaskets 1280, 1282 (e.g., elastomeric gaskets). The gaskets 1280, 1282 can also help provide adequate physical pressure to the cartridge 210 so a tight seal is maintained on the upper and lower flanges 256 of the cartridge 210 when the stem body 105 and lid body 115 are coupled together.

For instance, to facilitate forming the first liquid-tight seal coupling 330a, the lid body 115 can further include a spout gasket 1280 (e.g., an O-ring) configured to contact the connection end 162 of the lid body 115 and the top end 254 of the ion exchange resin filled cartridge 210 when the cap region 240 is coupled to the connection end 162.

For instance, to facilitate forming the second liquid-tight seal coupling 330b, the stem body 105 can further include a stem body gasket 1282 (e.g., an O-ring) configured to contact the base region 1220 of the stem body 105 and the bottom end 252 of the cartridge 210 when the cap region 240 is coupled to the connection end 162.

In some embodiments, the stem body 105 can further include an outer body gasket 1284 (e.g., an O-ring) configured to contact the cap region 240 of the stem body 105 (e.g., an outer surface 1286 of the cap region 240, FIG. 13C) and the outer body 1250 (e.g., the trim ring 270 when present) when the cap region 240 is coupled to the connection end 162. The outer body gasket 1284 can help provide a tight fitting seal between the stem body 105 and the outer body 1250.

In some embodiments, any of the gaskets 1280, 1282, 1284 can be removable from the lid body 115 or stem body 105, e.g., to facilitate replacement. In other embodiments, any of the gaskets 1280, 1282, 1284 can be fixed in place on the lid body 115 or stem body 105 (e.g., via ultrasonic welding, heat welding or food grade adhesives such as silicone or epoxy).

Those skilled in the art to which this application relates will appreciate that other and further additions, deletions, substitutions and modifications may be made to the described embodiments.

## Claims

1. A beverage filtration device, comprising:
a lid body having an internal housing configured to hold an ion exchange resin-filed cartridge therein, the lid body having a connection end and a top end having an opening therein; and
a stem body, the stem body including:
a cap region configured to couple to the connection end of the lid body to form a reversible liquid-tight seal coupling there-between,
a collar, wherein a first portion of a wall of the collar is sized to fit inside a mouth of a beverage container and a second portion of the wall sized to be located outside of the mouth,
a beverage conduit spanning the collar, wherein a first opening of the conduit opens to the coupling between the cap region the connection end and a second opening of the conduit opens to an interior of the beverage container, and
a stem body air tube extending through the collar, wherein:
a proximal opening of the stem body air tube opens to an air vent hole located in the second portion of the wall of the collar, and
a distal opening of the stem body air tube opens to the interior of the beverage container.

2. The device of claim 1, wherein the connection end of the lid body includes an interior ridge section and the cap region includes a rim insertable into the ridge section to abut against an interior lip of the ridge section to thereby form the reversible coupling between the cap region and the connection end.

3. The device of claim 2, wherein the reversible coupling between the interior ridge section and an insertion zone of the rim includes a compression snap fit, a gasket o-ring seal, a threaded connection or combination thereof.

4. The device of claim 3, wherein the threaded connection includes:
the interior ridge section of the connection end of the lid body having one or more raised alignment tabs or clamping hooks, and
the insertion zone of the stem body having one or more slots, each of the raised alignment tabs or clamping hooks insertable into one of the slots such that, when the connection end and the insertion zone are rotated relative to each other, the liquid-tight seal coupling is formed.

5. The device of any of the preceding claims, wherein the ion exchange resin-filed cartridge is removeable from the internal housing when the lid body and the stem body are uncoupled by disconnecting an interior ridge section of the connection end and an insertion zone of the rim from each other.

6. The device of any of the preceding claims, wherein the lid body further includes a pouring spout body coupled to and encompassing an outer perimeter of the top end of the lid body.

7. A beverage filtration device, comprising:
a lid body, the lid body including:
a connection end;
a top end having an opening therein, and
a pouring spout body encompassing the opening; and
a stem body the stem body including:
an internal housing configured to hold an ion exchange resin-filed cartridge therein;
a cap region configured to couple to the connection end of the lid body to thereby form a first liquid-tight seal coupling between the connection end of the lid body and a top end of the ion exchange resin-filed cartridge, and, form a second a liquid-tight seal coupling between a base region of the internal housing and a bottom end of the ion exchange resin-filed cartridge;
a collar, wherein a first portion of a wall of the collar is sized to fit inside a mouth of a beverage container and a second portion of the wall sized to be located outside of the mouth,
a beverage conduit spanning the collar, wherein a first opening of the conduit opens to the base region of the internal housing and a second opening of the conduit opens to an interior of the beverage container, and
a stem body air tube extending through the collar, wherein:
a proximal opening of the stem body air tube opens to an air vent hole located in the second portion of the wall of the collar, and
a distal opening of the stem body air tube opens to the interior of the beverage container.

8. The device of claim 7, wherein the cap region of the stem body and the connection end of the lid body are adjustable relative to each other such that the lid body and the stem body are reversibly coupled.

9. The device of claim 8, wherein the first liquid-tight seal coupling between the connection end and the cap region includes a compression snap fit, a gasket o-ring seal, a threaded connection or combination thereof to form the reversible coupling.

10. The device of claim 9, wherein the threaded connection includes:
a surface of the connection end facing the cap region having one or more raised alignment tabs or clamping hooks, and
a rim of the cap region having one or more slots, each of the raised alignment tabs or clamping hooks insertable into one of the slots such that when the connection end and the cap region are rotated relative to each other, the first and second liquid-tight seal couplings are formed.

11. The device of any of claims 7 to 10, wherein the opening in the top end of the lid body is elliptically shaped with a major axis of the ellipse being parallel to a direction that the beverage is poured out of through the device.

12. The device of any of claims 7 to 11, wherein an outer perimeter of the top end of the lid body is elliptically-shaped and the connection end of the lid body is circularly-shaped.

13. The device of any of claims 7 to 12, further including an outer body secured to the stem body and holding the stem body therein.

14. The device of any of claims 7 to 13, wherein the lid body further includes a spout gasket configured to contact the connection end of the lid body and the top end of the ion exchange resin filled cartridge when the cap region is coupled to the connection end.

15. The device of any of claims 7 to 14, wherein the stem body further includes a stem gasket configured to contact the base region of the lid body and the bottom end of the ion exchange resin filled cartridge when the cap region is coupled to the connection end.
